# EUROPÄISCHE PATENTANMELDUNG

(11) **EP 0 960 639 A2**
(43) Veröffentlichungstag der Anmeldung: **01.12.1999**
(21) Anmeldenummer: 98118255.3
(22) Anmeldetag: 25.09.1998
(51) Int. Cl.: B01D 1/22

(54) **Dünnschichtverdampfer**

(30) Priorität: 28.05.1998 CH 116898
(71) Anmelder: Buss- SMS GmbH Verfahrenstechnik, Butzbach, Zweigniederlassung Pratteln, 4133 Pratteln (CH)
(72) Erfinder: Brenner, Klaus, 61231 Bad Nauheim (DE); Janosfia, Atilla, 8055 Zürich (CH); Krüger, Wolfgang, 35510 Butzbach-Griedel (DE)
(74) Vertreter: Patentanwälte Schaad, Balass, Menzl & Partner AG

(57) **Zusammenfassung**

Es wird ein Dünnschichtapparat mit einer innerhalb eines Gehäuses angeordneten Heizkammer beschrieben. Der Dünnschichtapparat umfaßt zumindest eine durch einen Bereich der Innenseite der Gehäusewand gebildete Heizfläche, eine in der Gehäusewand ausgebildete Zuführöffnung zum Zuführen von thermisch zu behandelnden Stoffen in die Heizkammer, eine in der Gehäusewand ausgebildete Abführöffnung zum Abführen der behandelten Stoffe aus der Heizkammer und eine im Inneren der Heizkammer angeordnete Transporteinheit, durch die die über die Zuführöffnung in die Heizkammer eingebrachten Stoffe an der Innenseite der Gehäusewand verteilt und/oder in Richtung der Abführöffnung transportiert werden. Zur Erhitzung der Heizfläche ist eine Induktionsheizung vorgesehen, die zumindest eine an dem Gehäuse vorgesehene Induktionsspule umfaßt. Der Induktionskern der Induktionsheizung wird unmittelbar durch den die Heizfläche definierenden Abschnitt der Gehäusewand gebildet, so daß dieser Abschnitt der Gehäusewand durch Anlegen einer Wechselspannung an die Induktionsspule direkt erhitzbar ist.

## Beschreibung

Die vorliegende Erfindung betrifft einen Dünnschichtapparat mit einer innerhalb eines Gehäuses angeordneten Heizkammer, mit zumindest einer durch einen Bereich der Innenseite der Gehäusewand gebildeten Heizfläche, mit einer in der Gehäusewand ausgebildeten Zuführöffnung zum Zuführen von thermisch zu behandelnden Stoffen in die Heizkammer, mit einer in der Gehäusewand ausgebildeten Abführöffnung zum Abführen der behandelten Stoffe aus der Heizkammer und mit einer im Inneren der Heizkammer angeordneten Transporteinheit, durch die die über die Zuführöffnung in die Heizkammer eingebrachten Stoffe an der Innenseite der Gehäusewand verteilt und/oder in Richtung der Abführöffnung transportiert werden.

Dünnschichtapparate dieser Art werden beispielsweise für die thermische Behandlung von Stoffen mit besonderen Eigenschaften, wie beispielsweise hohe Temperaturempfindlichkeit, hoher Siedepunkt, hohe Viskosität usw., verwendet. Dabei umfaßt der Begriff thermische Behandlung das Verdampfen, Destillieren, Konzentrieren, Entgasen und Trocknen der Stoffe sowie die Durchführung von die Stoffe betreffenden Reaktionen.

Die Stoffe werden für die thermische Behandlung der Heizkammer zugeführt und üblicherweise über die Transporteinheit in einer dünnen Schicht an der Innenseite der Gehäusewand verteilt. Die Transportvorrichtung ist dabei in der Regel als Rotor ausgebildet, der neben der Verteilung der Stoffe an der Innenseite der Gehäusewand auch einen Transport der an der Innenwand verteilten dünnen Schicht in Richtung der Abführöffnung bewirkt.

Zur Erhitzung der an der Innenseite der Gehäusewand anliegenden dünnen Schicht ist das Gehäuse des Dünnschichtapparates mit einem Heizmantel umgeben, in den je nach erforderlicher Betriebstemperatur Sattdampf oder ein sonstiges geeignetes flüssiges oder dampfförmiges Wärmeträgermedium einführbar ist. Die Hitze dieses Mediums wird von der Außenseite des Gehäuses zu der Innenseite der Gehäusewand transportiert, so daß diese Innenseite eine Heizfläche für die an der Gehäusewand anliegende dünne Schicht bildet.

Da die zulässige Betriebstemperatur der üblicherweise verwendeten Wärmeträgermedien auf ca. 350 bis 380°C beschränkt ist und die bei diesen hohen Temperaturen auftretenden Betriebsdrücke im Heizmantel Gehäusewandstärken erfordern, die den Wärmedurchgang wesentlich einschränken, sind die Einstelimöglichkeiten für die Temperaturen in der Heizkammer nach oben dementsprechend beschränkt. Darüber hinaus sind entsprechend ausgebildete Dünnschichtapparate aufgrund der hohen Wandstärke sehr schwer und daher auch entsprechend kostspielig in der Herstellung.

Ein weiterer Nachteil der bekannten Dünnschichtapparate besteht darin, daß in vielen Anwendungsfällen, beispielsweise beim Einsatz in der Pharmaindustrie, ausgeschlossen werden muß, daß die behandelten Stoffe mit dem Wärmeträgermedium kontaminiert werden. Gerade bei den verwendeten hohen Drücken besteht jedoch die Gefahr, daß aufgrund von kleinsten Leckagen eine solche Kontaminierung nicht auszuschließen ist.

Aufgabe der Erfindung ist es, einen Dünnschichtapparat der eingangs genannten Art so auszubilden, daß er zum einen einfach und kostengünstig herstellbar ist und zum anderen eine Kontaminierung der zu behandelnden Stoffe ausgeschlossen ist.

Ausgehend von einem Dünnschichtapparat der eingangs genannten Art wird diese Aufgabe dadurch gelöst, daß zur Erhitzung der Heizfläche eine Induktionsheizung vorgesehen ist, die zumindest eine an dem Gehäuse vorgesehene Induktionsspule umfaßt, und daß der Induktionskern der Induktionsheizung unmittelbar durch den die Heizfläche definierenden Abschnitt der Gehäusewand gebildet wird, so daß dieser Abschnitt der Gehäusewand durch Anlegen einer Wechselspannung an die Induktionsspule direkt erhitzbar ist.

Da statt durch das Wärmeträgermedium die Erhitzung der Heizfläche durch Induktionsstrom erfolgt, kann prinzipbedingt eine Kontaminierung der Stoffe nicht erfolgen. Weiterhin wird durch die unmittelbare Verwendung der Gehäusewand als Induktionskern zum einen ein sehr einfacher und kostengünstiger Aufbau des Dünnschichtapparates erreicht, da auf zusätzliche Heizelemente verzichtet werden kann. Dabei ist gerade die Wahl des die Heizfläche definierenden Abschnittes der Gehäusewand als Induktionskern wesentlich, da die vorhandenen Stoffe als dünne Schicht auf dieser Heizfläche aufgebracht sind und somit eine schnelle und direkte Erhitzung dieser Stoffe erreicht wird, ohne daß Wärmeverluste in Kauf genommen werden müßten, die bei einem Transport von Wärme von einem Heizelement zu der Heizfläche existieren würden.

Nach einer weiteren vorteilhaften Ausführungsform der Erfindung ist das Gehäuse, insbesondere einschließlich der Induktionsspule oder der Induktionsspulen, von einer thermischen Isolation umgeben. Dadurch wird der Wirkungsgrad des Dünnschichtapparates erhöht. Es ist grundsätzlich auch möglich, daß die Induktionsspule oder die Induktionsspulen nicht von der Wärmeisolation umgeben ist, solange zumindest das Gehäuse und insbesondere der die Heizfläche definierende Abschnitt der Gehäusewand ausreichend thermisch isoliert ist.

Nach einer weiteren vorteilhaften Ausführungsform der Erfindung sind zwischen der Zuführöffnung und der Abführöffnung mehrere, insbesondere zwei Induktionsspulen vorgesehen, die in Transportrichtung der Stoffe hintereinander liegend angeordnet sind. Bevorzugt sind die Induktionsspulen dabei unabhängig voneinander mit Wechselspannung beaufschlagbar. Da jeder Induktionsspule ein bestimmter Abschnitt der Gehäusewand und damit ein eigener Heizflächenabschnitt zugeordnet ist, kann auf diese Weise die Temperatur dieser Heizflächenabschnitte unabhängig voneinander eingestellt werden. Die Wechselspannungen können auch unterschiedlich, aber abhängig voneinander eingestellt werden, so daß beispielsweise abhängig von einer zu niedrigen Temperatur des einen Heizflächenabschnitts die Temperatur des nachfolgenden Heizflächenabschnitts erhöht werden kann.

Vorteilhaft ist durch die unterschiedlichen Induktionsspulen ein vorgegebener Temperaturverlauf an der Heizfläche entlang der Transportrichtung der Stoffe einstellbar. Dabei kann bevorzugt eine Steuervorrichtung vorgesehen sein, durch die die Temperatur der Heizfläche und/oder der Temperaturverlauf an der Heizfläche insbesondere entlang der Transportrichtung der Stoffe einstellbar ist.

Auf diese Weise kann erreicht werden, daß beispielsweise im Bereich der Abführöffnung die auf die Stoffe einwirkende Temperatur niedriger oder höher ist als beispielsweise die Temperatur im Bereich der Zuführöffnung oder im Bereich zwischen den beiden Öffnungen des Dünnschichtapparates. Je nach Anzahl der vorgesehenen Induktionsspulen werden eine entsprechende Anzahl von Heizflächen gebildet, so daß der Temperaturverlauf entlang der Transportrichtung der Stoffe bei einer entsprechenden hohen Anzahl von Induktionsspulen sehr fein eingestellt werden kann.

Nach einer weiteren bevorzugten Ausführungsform der Erfindung ist eine Kühleinrichtung zum Abkühlen der Heizfläche vorgesehen, so daß die Temperatur der Heizfläche im Bedarfsfall rasch abgekühlt werden kann. Die Kühleinrichtung kann beispielsweise Kühlschlangen oder Kühlkammern umfassen, wobei eine Vielzahl von unterschiedlichen Kühlelementen vorgesehen sein kann, um die Abkühlung entlang der Gehäusewand variabel einstellen zu können.

Weitere vorteilhafte Ausführungsformen der Erfindung sind in den Unteransprüchen angegeben.

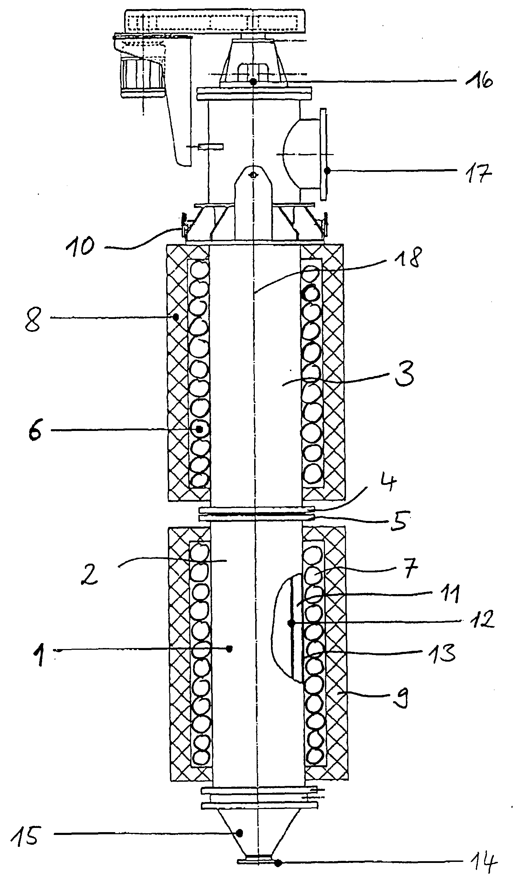

Die Erfindung wird nachfolgend anhand eines Ausführungsbeispiels unter Bezugnahme auf die einzige Zeichnung näher beschrieben.

Die Figur zeigt einen Dünnschichtapparat, der ein zylindrisches Gehäuse 1, das aus zwei zylindrischen Gehäuseabschnitten 2, 3 besteht, umfaßt. Die Gehäuseabschnitte 2, 3 besitzen an ihren einander zugeordneten Stirnseiten jeweils einen Flansch 4, 5, über die sie koaxial ausgerichtet miteinander verbunden sind. Die Gehäuseabschnitte 2, 3 sind von einer ersten und einer zweiten Induktionsspule 6, 7 umgeben, die an eine nicht dargestellte Steuervorrichtung zum Anlegen von Wechselspannung an die Induktionsspulen 6, 7 angeschlossen sind.

Die Induktionsspulen 6, 7 sind jeweils von einem eine thermische Isolation 8, 9 bildenden Isoliermantel umgeben, der somit auch die Gehäuseabschnitte 2, 3 nach außen thermisch isoliert.

An der Oberseite des Gehäuses 1 ist eine Zuführöffnung 10 ausgebildet, über die thermisch zu behandelnde Stoffe in eine im Inneren des Gehäuses 1 ausgebildete Heizkammer 11 eingebracht werden können. Durch die Heizkammer 11 erstreckt sich in koaxialer Richtung ein schematisch angedeuteter Rotor 12, mit dem die über die Zuführöffnung 10 in die Heizkammer 11 eingeführten Stoffe radial nach außen auf die Innenseite der Gehäusewand 13 verteilt werden, so daß sie dort eine dünne Schicht bilden. Gleichzeitig wird diese dünne Schicht über den Rotor 12 entlang der Innenseite der Gehäusewand 13 von der Zuführöffnung 10 nach unten in Richtung einer Austrittsöffnung 14 des Dünnschichtapparats bewegt.

Zu diesem Zweck ist der Rotor 12 in dem unteren Abschnitt 15 sowie in dem oberen Abschnitt 16 des Dünnschichtapparats über eine Drehachse 18 drehbar gelagert, wobei beispielsweise im oberen Bereich 16 ein entsprechender Antrieb für den Rotor 12 vorgesehen ist.

Ebenfalls im oberen Bereich des Dünnschichtapparates ist ein Brüdenaustritt 17 vorgesehen, durch den bei entsprechender Hitzezufuhr verdampfende, leichtflüchtige Anteile der erhitzten Stoffe aus dem Dünnschichtapparat austreten können. Es ist auch möglich, daß innerhalb des Gehäuses 11 zusätzlich oder anstelle des Brüdenaustritts 17 ein Kondensator vorgesehen ist, an dem entsprechende Stoffanteile abgeschieden werden.

Im folgenden wird die Funktionsweise eines erfindungsgemäßen Dünnschichtapparates näher beschrieben:

Die thermisch zu behandelnden Stoffe werden über die Zuführöffnung 10 in die im Inneren der Gehäuse 1 ausgebildete Heizkammer 11 eingebracht. Dort werden sie durch den Rotor 12 auf der Innenseite der Gehäusewand 13 so verteilt, daß sie dort eine dünne Schicht bilden, die gleichzeitig durch den Rotor 12 in Richtung der Abführöffnung 14 gefördert wird.

Durch Anlegen einer Wechselspannung an die Induktionsspulen 6, 7 werden unmittelbar jeweils die Abschnitte der Gehäusewand 13, die von den Induktionsspulen 6, 7 umfaßt werden, erhitzt, so daß die Innenseiten dieser Gehäusewandabschnitte Heizflächen für die an diesen Innenseiten anliegenden dünnen Stoffschichten bilden.

Durch entsprechende Steuerung der an den Induktionsspulen 6, 7 anliegenden Spannungen können dabei entlang der Längsachse des Gehäuses 1 unterschiedliche Temperaturen bzw. Temperaturverläufe eingestellt werden.

Nach erfolgter thermischer Behandlung werden die Stoffe über die Abführöffnung 14 des Dünnschichtapparates ausgeschieden und der weiteren Verwendung zugeführt.

Gegenüber den bekannten Dünnschichtapparaten weist ein erfindungsgemäßer Dünnschichtapparat einen besseren thermischen Wirkungsgrad, eine präzisere Regelbarkeit der Betriebstemperatur sowie eine wesentlich flexiblere Wahl der Betriebstemperatur auf. Weiterhin wird eine Kontaminierung der zu behandelnden Stoffe durch Wärmeträgermedien vollständig ausgeschlossen. Da für einen erfindungsgemäßen Dünnschichtapparat insbesondere bei Vakuumbetrieb kein Druckbehälter erforderlich ist, können auch diesbezüglich die Kosten gegenüber einem Dünnschichtapparat nach dem Stand der Technik reduziert werden.

Je nach Bedarfsfall können unterschiedlich konzeptierte Rotoren verwendet werden und der Dünnschichtapparat in vertikaler, horizontaler oder sonstiger Anordnung betrieben werden. Weiterhin kann das Gehäuse statt einer zylindrischen beispielsweise eine konische, eine doppelkonische oder eine in sonstiger Weise geeignete Form besitzen.

Um die Haltbarkeit des erfindungsgemäßen Dünnschichtapparates zu erhöhen, kann je nach Anforderung an die Korrosionsbeständigkeit der für die Stoffe zugänglichen Teile eine Beschichtung mit korrosionsbeständigem Material, beispielsweise eine Plattierung mit Edelstahl, vorgesehen sein, Darüber hinaus kann insbesondere die Innenseite der Gehäusewand 13 auch abrasionsbeständig ausgebildet, insbesondere mit abrasionsbeständigem Material plattiert sein.

## Patentansprüche

1. Dünnschichtapparat mit einer innerhalb eines Gehäuses (1) angeordneten Heizkammer (11), mit zumindest einer durch einen Bereich der Innenseite der Gehäusewand (13) gebildeten Heizfläche, mit wenigstens einer in der Gehäusewand (13) ausgebildeten Zuführöffnung (10) zum Zuführen von thermisch zu behandelnden Stoffen in die Heizkammer (11), mit einer in der Gehäusewand (13) ausgebildeten Abführöffnung (14) zum Abführen der behandelten Stoffe aus der Heizkammer (11) und mit einer im Inneren der Heizkammer (11) angeordneten Transporteinheit (12), durch die die über die Zuführöffnung (10) in die Heizkammer (11) eingebrachten Stoffe an der Innenseite der Gehäusewand (13) verteilt und/oder in Richtung der Abführöffnung (14) transportiert werden,
dadurch **gekennzeichnet,**
daß zur Erhitzung der Heizfläche eine Induktionsheizung vorgesehen ist, die zumindest eine an dem Gehäuse (1) vorgesehene Induktionsspule (6, 7) umfaßt, und daß der Induktionskern der Induktionsheizung unmittelbar durch den die Heizfläche definierenden Abschnitt der Gehäusewand (13) gebildet wird, so daß dieser Abschnitt der Gehäusewand (13) durch Anlegen einer Wechselspannung an die Induktionsspule (6, 7) direkt erhitzbar ist.

2. Dünnschichtapparat nach Anspruch 1,
dadurch **gekennzeichnet,**
daß das Gehäuse (1), insbesondere einschließlich der Induktionsspule oder der Induktionsspulen (6, 7), von einer thermischen Isolation (8, 9) umgeben ist.

3. Dünnschichtapparat nach Anspruch 1 oder 2,
dadurch **gekennzeichnet,**
daß die Induktionsspule oder die Induktionsspulen (6, 7) an der Außenseite des Gehäuses (1) vorgesehen sind.

4. Dünnachichtapparat nach einem der vorhergehenden Ansprüche,
dadurch **gekennzeichnet,**
daß zwischen der Zuführöffnung (10) und der Abführöffnung (14) mehrere, insbesondere zwei Induktionsspulen (6, 7) vorgesehen sind, die in Transportrichtung der Stoffe hintereinanderliegend angeordnet sind.

5. Dünnschichtapparat nach Anspruch 4,
dadurch **gekennzeichnet,**
daß die Induktionsspulen (6, 7) unabhängig voneinander mit Wechselspannung beaufschlagbar sind.

6. Dünnschichtapparat nach Anspruch 4 oder 5,
dadurch **gekennzeichnet,**
daß durch die unterschiedlichen Induktionsspulen (6, 7) ein vorgegebener Temperaturverlauf an der Heizfläche entlang der Transportrichtung der Stoffe einstellbar ist.

7. Dünnschichtapparat nach einem der vorhergehenden Ansprüche,
dadurch **gekennzeichnet,**
daß eine Steuervorrichtung vorgesehen ist, durch die die Temperatur der Heizfläche und/oder der Temperaturverlauf an der Heizfläche insbesondere entlang der Transportrichtung der Stoffe einstellbar ist.

8. Dünnschichtapparat nach einem der vorhergehenden Ansprüche,
dadurch **gekennzeichnet,**
daß eine Kühleinrichtung zum Abkühlen der Heizfläche vorgesehen ist.

9. Dünnschichtapparat nach einem der vorhergehenden Ansprüche,
dadurch **gekennzeichnet,**
daß die Innenseite der Gehäusewand (13) insbesondere in ihrem die Heizfläche bildenden Bereich mit korrosionsbeständigem und/oder abresionsbeständigem Material beschichtet, insbesondere plattiert ist.

10. Dünnschichtapparat nach einem der vorhergehenden Ansprüche,
dadurch **gekennzeichnet,**
daß das Gehäuse (1) im wesentlichen einen zylindrischen Querschnitt besitzt und im wesentlichen die gesamte Innenseite des Zylindermantels die Heizfläche bildet.

11. Dünnschichtapparat nach einem der vorhergehenden Ansprüche,
dadurch **gekennzeichnet,**
daß die Transporteinheit als Rotor (12) ausgebildet ist.
